# EUROPÄISCHE PATENTANMELDUNG

(11) **EP 3 501 365 A1**
(43) Veröffentlichungstag der Anmeldung: **26.06.2019**
(21) Anmeldenummer: 18206417.0
(22) Anmeldetag: 15.11.2018
(51) Int. Cl.: A47L 11/40, A47L 11/06

(54) **ANTRIEBSSYSTEM ZUM EXZENTRISCHEN ANTRIEB EINES SCHWINGELEMENTES UND FEUCHTREINIGUNGSGERÄT MIT EINEM ANTRIEBSSYSTEM**

(30) Priorität: 21.12.2017 DE 102017130995
(71) Anmelder: Vorwerk & Co. Interholding GmbH, 42275 Wuppertal (DE)
(72) Erfinder: Caldewey, Uwe, 44229 Dortmund (DE)
(74) Vertreter: Müller, Enno

(57) **Zusammenfassung**

Die Erfindung betrifft ein Antriebssystem (1) zum exzentrischen Antrieb eines Schwingelementes (2), insbesondere einer Schwingplatte eines Feuchtreinigungsgerätes (3), wobei das Antriebssystem (1) einen Motor mit einer Motorwelle (4), einen mit der Motorwelle (4) verbundenen Rotor (5) und einen mit der Motorwelle (4) verbundenen Exzenter (6) aufweist, wobei der Exzenter (6) eingerichtet ist, eine Rotationsbewegung der Motorwelle (4) in eine exzentrische Schwingbewegung des Schwingelementes (2) zu wandeln. Um auf optimale Art und Weise einen Unwuchtausgleich zu erreichen, wird vorgeschlagen, dass der Rotor (5) in einer Querschnittsebene (7, 8) senkrecht zu der Motorwelle (4) zum Zwecke eines Unwuchtausgleichs asymmetrisch bezogen auf die Motorwelle (4) ausgebildet ist. Des Weiteren wird ein Feuchtreinigungsgerät (3) mit einer ein Reinigungselement (15) aufnehmenden Schwingplatte vorgeschlagen.

## Beschreibung

### Gebiet der Technik

Die Erfindung betrifft ein Antriebssystem zum exzentrischen Antrieb eines Schwingelementes eines Bodenbearbeitungsgerätes, wobei das Antriebssystem einen Innenläufer-Motor mit einem Stator, einer Motorwelle, einen mit der Motorwelle verbundenen Rotor und einen mit der Motorwelle verbundenen Exzenter aufweist, wobei der Exzenter eingerichtet ist, eine Rotationsbewegung der Motorwelle in eine exzentrische Schwingbewegung des Schwingelementes zu wandeln.

Des Weiteren betrifft die Erfindung ein Feuchtreinigungsgerät mit einer ein Reinigungselement aufnehmenden Schwingplatte.

### Stand der Technik

Exzentrische Antriebssysteme kommen dort zum Einsatz, wo eine Rotationsbewegung in eine exzentrische Schwingbewegung übersetzt werden soll. Dies ist bspw. der Fall bei Feuchtreinigungsgeräten, welche ein flächenförmig ausgebildetes Schwingelement aufweisen, welches der Reinigung von insbesondere Hartböden, wie Fliesenböden oder Parkettböden, dient. Bei einem üblichen Reinigungsbetrieb des Feuchtreinigungsgerätes überlagert die exzentrische Schwingbewegung des Schwingelementes eine Verschiebebewegung des Feuchtreinigungsgerätes auf der zu reinigenden Fläche. Ein derartiges Feuchtreinigungsgerät ist bspw. aus der EP 2 578 131 B1 bekannt.

Die Schwingbewegung wird durch einen Elektromotor erreicht, an dessen Motorwelle ein Exzenter angeordnet ist, mit welchem wiederum das Schwingelement, nämlich hier das Reinigungselement des Feuchtreinigungsgerätes, verbunden ist.

Bei derartigen Antriebssystemen und Feuchtreinigungsgeräten ist es üblich, eine zwangsläufig durch den Exzenter bedingte Unwucht des Antriebssystems zu kompensieren. Dies geschieht im Stand der Technik durch mehrere Kontergewichte.

### Zusammenfassung der Erfindung

Ausgehend von dem vorgenannten Stand der Technik ist es Aufgabe der Erfindung, eine besonders einfache und einen geringen Herstellungsaufwand erfordernde Möglichkeit zur Kompensation der Unwucht zu schaffen.

Zur Lösung der vorgenannten Aufgabe wird mit der Erfindung zunächst ein Antriebssystem der vorgenannten Art vorgeschlagen, bei welchem der Rotor in einer Querschnittsebene senkrecht zu der Motorwelle und in einer radialen Überdeckung zu dem Stator zum Zwecke eines Unwuchtausgleichs asymmetrisch bezogen auf die Motorwelle ausgebildet ist. Der zur Erzeugung des Drehmomentes des Elektromotors notwendige Rotor selbst ist, auch zur Erzeugung einer wesentlichen, zum Ausgleich der durch das Schwingelement erzeugten Unwucht dienenden Ausgleichsunwucht genutzt.

Die Asymmetrie des Rotors, wie er als Funktionselement in Zusammenwirkung mit dem Stator bei einem hiermit gebildeten Elektromotor vorgesehen ist, verursacht die genannte Ausgleichsunwucht beziehungsweise eine definierte Unwucht, welche die Unwucht des gesamten Antriebssystems kompensiert, d. h. verringert oder eliminiert. Je nach der Akzeptanz einer gewissen Unwucht für das gesamte Antriebssystem kann ggf. komplett auf ein zusätzliches Kontergewicht verzichtet werden. Ein zusätzliches Auswuchten des Antriebssystems ist in den meisten Fällen nicht mehr notwendig, da die Asymmetrie des Rotors eine Unwucht verursacht, die die durch den Exzenter verursachte Unwucht zum größten Teil zu kompensieren vermag.

Der Rotor des Antriebssystems kann im Hinblick auf eine spezifische Ausbildung des Elektromotors, dessen Teil der Rotor ist, in grundsätzlich bekannter Weise ausgebildet sein. So kann er hinsichtlich insbesondere eines Reluktanzmotors aus einer Vielzahl von übereinander angeordneten, vorzugsweise gestanzten, Metallblechen bestehen und vorzugsweise ferromagnetisierbar sein. Der Rotor kann auch, wie bei bekannten Bürstenmotoren, beispielsweise Gleichstrommotoren, eine Wicklung und gegebenenfalls einen Kommutator aufweisen. Im Einzelnen bestehen bezüglich der Form des Rotors unterschiedliche Ausführungsmöglichkeiten, die zugunsten eines Unwuchtausgleiches vorteilhaft genutzt werden können. Insbesondere kann ein Massenschwerpunkt des Rotors bezogen auf eine radiale Richtung der Motorwelle näher oder weiter entfernt zu der Motorwelle platziert werden. Hinsichtlich einer möglichen Ausgestaltung eines Reluktanzmotors, ohne jedoch die hier spezifische Anpassung des Rotors, wird etwa auf die WO 2005/020410 A2 verwiesen. Der hierin beschriebene, im Wesentlichen sternförmig ausgebildete Rotor kann für die Zwecke vorliegender Erfindung beispielsweise über einen fehlenden oder verkürzten radialen Sternfortsatz (nur) verfügen. Hinsichtlich über Bürsten oder Kohlen kommutierte Motoren wird auch beispielsweise auf die DE 196 06 146 A1 und die DE 10119 734 A1 verwiesen. Die dort beschriebenen, zu der geometrischen Achse der Motorwelle symmetrisch aufgebauten Rotoren können entsprechend vorliegender Erfindung eine asymmetrische Gestaltung aufweisen zur Erzeugung der genannten definierten Unwucht innerhalb des Elektromotors selbst.

Durch die Erfindung wird die Anzahl der Teile des Antriebssystems reduziert, da der Rotor selbst als Kontergewicht dient und in den meisten Fällen kein zusätzliches Kontergewicht für das Antriebssystem erforderlich ist. Es ist kein Auswuchten des Antriebssystems erforderlich, da das Antriebssystem insgesamt aufgrund der Dimension des Rotors eine relativ große Gesamtunwucht aufweist. Die Laufruhe des Antriebssystems ergibt sich dabei erst bei Verbindung mit dem angetriebenen Schwingelement.

Der Innenläufer-Motor kann in weiterer Einzelheit als Scheibenläufer-Motor ausgebildet sein. Vorzugsweise wird der Motor elektronisch kommutiert.

Zudem wird vorgeschlagen, dass der Exzenter eine unmittelbare Wirkverbindung zu dem Rotor aufweist, wobei der Exzenter insbesondere ohne Zwischenanordnung eines Getriebes mit dem Rotor verbunden ist. Durch die direkte Verbindung des Exzenters mit dem Rotor wird das Antriebssystem wesentlich vereinfacht. Durch den Direktantrieb des Exzenters wird ein Getriebe zwischen dem Rotor und dem Exzenter obsolet, wodurch einerseits die Robustheit des Antriebssystems verbessert wird und zum anderen ein deutlich höherer Wirkungsgrad erreicht wird, da die durch das Getriebe verursachte Verlustleistung entfällt. Insgesamt weist das vorgeschlagene Antriebssystem somit gegenüber Antriebssystemen mit Getrieben eine um ca. 40% bis 50% (oder weniger) geringere Leistungsaufnahme auf. Damit ist das Antriebssystem insbesondere auch für einen Akkubetrieb des das Antriebssystem aufweisenden Gerätes geeignet.

Es wird vorgeschlagen, dass der Rotor in zwei verschiedenen Querschnittsebenen entlang der Motorwelle asymmetrisch ausgebildet ist, wobei der Rotor in den beiden Querschnittsebenen eine zueinander abweichende Form und/oder abweichende radiale Position eines Massenschwerpunktes des Rotors aufweist. Durch diese Ausgestaltung werden Unwuchten in unterschiedlichen Ebenen senkrecht zu der Längserstreckung der Motorwelle erzeugt, um die Gesamtunwucht des Antriebssystems zu verringern bzw. zu eliminieren. Dazu wird ein Teilbereich des Rotors in einer ersten Querschnittsebene anders ausgebildet als ein weiterer Teilbereich in einer davon abweichenden zweiten Querschnittsebene. Die Asymmetrie des Rotors kann einerseits durch eine abweichende Form innerhalb der beiden Querschnittsebenen erreicht werden und/oder durch eine abweichende radiale Positionierung des Massenschwerpunktes. Somit werden in den beiden Querschnittsebenen insgesamt zwei Ausgleichsmassen geschaffen, die nach theoretischen Betrachtungen zum Ausgleich einer Unwucht in einer Ebene des Antriebssystems geeignet sind. Die Änderung der Position des Massenschwerpunktes des Rotors kann dabei bspw. durch die Form des Rotors in der jeweiligen Querschnittsebene erreicht werden, oder alternativ durch die Wahl unterschiedlicher Materialien mit verschiedenen Volumengewichten und dergleichen.

Insbesondere wird vorgeschlagen, dass der Rotor in einer ersten Querschnittsebene bezogen auf eine Umfangsrichtung der Motorwelle einen anderen Winkelteilbereich bedeckt als in einer zweiten Querschnittsebene. Der Rotor kann bspw. in Umfangsrichtung so ausgebildet sein, dass in einer ersten Querschnittsebene ein anderer Winkelteilbereich durch den Rotor belegt ist, als in einer dazu benachbarten zweiten Querschnittsebene. Insbesondere können sich die Rotorteilbereiche in der ersten Querschnittsebene und der zweiten Querschnittsebene auch bezogen auf die Motorwelle punktsymmetrisch und/oder spiegelsymmetrisch gegenüber stehen.

Besonders vorteilhaft kann der Rotor in der ersten Querschnittsebene einen Winkelteilbereich von 0° bis 180° bedecken, und in der zweiten Querschnittsebene einen Winkelteilbereich von 180° bis 360° bedecken. In einem Spezialfall kann bspw. vorgesehen sein, dass eine äußere Grundform des Rotors im Wesentlichen zylinderförmig ist, wobei ein erster halbkreisförmiger Zylinderabschnitt in einer anderen Querschnittsebene liegt als ein zweiter halbkreisförmiger Zylinderabschnitt, wobei die Zylinderabschnitte zueinander um 180° um die Motorwelle rotiert sind. Bei einer Betrachtung des Rotors in Richtung der Längsachse der Motorwelle bilden die beiden Rotorteilbereiche zusammen eine vollständige Kreisform. Insgesamt ist der Rotor dadurch so ausgestaltet, dass Unwuchten in unterschiedlichen Querschnittsebenen entlang der Längserstreckung der Motorwelle erzeugt werden, welche die Gesamtunwucht des Antriebssystems verringern bzw. eliminieren.

Zudem kann vorgesehen sein, dass dem Rotor ein separat zu dem Rotor an der Motorwelle angeordnetes Kontergewicht zugeordnet ist. Das Antriebssystem weist somit nicht nur den Rotor auf, welcher selbst als Kontergewicht dient, sondern zusätzlich ein weiteres, separat zu dem Rotor ausgebildetes, Kontergewicht. Das zusätzliche Kontergewicht kann umso geringer ausfallen, je mehr der Massenschwerpunkt des Schwingelementes mit dem daran angeordneten Reinigungselement an der Querschnittsebene des Massenschwerpunktes des Rotors liegt. Das Kontergewicht befindet sich dabei in einer von der Querschnittsebene des Rotors abweichenden Querschnittsebene, insbesondere um mehrere Zentimeter zu diesem beabstandet.

Des Weiteren wird vorgeschlagen, dass das Antriebssystem zwischen dem Rotor und dem Exzenter und/oder zwischen dem Kontergewicht und dem Rotor ein Lager für die Motorwelle aufweist. Durch die Platzierung des ohnehin an der Motorwelle vorhandenen Lagers zwischen dem Rotor und dem Exzenter bzw. dem Kontergewicht und dem Rotor ergibt sich eine Ausbildung von Unwuchten in unterschiedlichen Querschnittsebenen bezogen auf die Motorwelle. Insbesondere kann durch die Platzierung des Lagers zwischen dem Rotor und dem Kontergewicht eine platzsparende Ausbildung des Antriebssystems erreicht werden. Da insbesondere durch die Beabstandung des Rotors und des Kontergewichtes ohnehin ein freibleibender Abschnitt auf der Motorwelle entsteht, kann durch die Anordnung des Lagers in diesem Bereich eine besonders kleine Bauform des Antriebssystems erzielt werden.

Es wird vorgeschlagen, dass der Rotor in einer ersten Querschnittsebene bezogen auf eine Umfangsrichtung der Motorwelle einen anderen Winkelteilbereich bedeckt als das Kontergewicht in einer zweiten Querschnittsebene. Gemäß dieser Ausgestaltung können der Rotor und das Kontergewicht relativ zu der Motorwelle und zueinander so orientiert und ausgebildet sein, wie dies zuvor in Bezug auf einen Rotor mit Rotorteilbereichen in unterschiedlichen Querschnittsebenen beschrieben wurde. Beispielsweise kann der Rotor bezogen auf die Umfangsrichtung der Motorwelle einen anderen Winkelteilbereich bedecken als das Kontergewicht. Beispielsweise kann der Rotor in der ersten Querschnittsebene einen Winkelteilbereich von 0° bis 180° bedecken, und das Kontergewicht in der zweiten Querschnittsebene einen Winkelteilbereich von 180° bis 360°. Der Rotor und das Kontergewicht sind bezogen auf ihre jeweilige Querschnittsebene beispielsweise halbkreisförmig ausgebildet, so dass sich bei einer Betrachtung des Rotors in Richtung der Längserstreckung der Motorwelle eine geschlossene Kreisform ergibt.

Neben dem zuvor beschriebenen Antriebssystem wird mit der Erfindung ebenso ein Feuchtreinigungsgerät mit einer ein Reinigungselement aufnehmenden Schwingplatte vorgeschlagen, wobei das Feuchtreinigungsgerät ein erfindungsgemäßes Antriebssystem aufweist, und wobei das angetriebene Schwingelement des Antriebssystems die das Reinigungselement aufnehmende Schwingplatte des Feuchtreinigungsgerätes ist. Durch die Integration des erfindungsgemäßen Antriebssystems in das Feuchtreinigungsgerät ergeben sich die zuvor in Bezug auf das Antriebssystem beschriebenen Vorteile, insbesondere kompensieren sich die Gesamtunwucht des Antriebssystems und die Unwucht des Schwingelementes des Feuchtreinigungsgerätes derart, dass sich beim Betrieb des Feuchtreinigungsgerätes eine optimale Laufruhe ergibt. Die Merkmale des erfindungsgemäßen Antriebssystems gelten entsprechend auch für das erfindungsgemäße Feuchtreinigungsgerät, welches ein solches Antriebssystem aufweist. Diesbezüglich wird auf die einzelnen Merkmale und Ausführungsformen in der vorhergehenden Beschreibung verwiesen.

Schließlich wird vorgeschlagen, dass der Innenläufer-Motor so in dem Feuchtreinigungsgerät eingebaut ist, dass die Motorwelle des Innenläufer-Motors während einer üblichen Gebrauchsstellung des Feuchtreinigungsgerätes während eines Reinigungsbetriebs auf einer horizontalen ebenen Fläche im Wesentlichen vertikal orientiert ist. Der Motor wird demnach vertikal in dem Feuchtreinigungsgerät angeordnet, so dass die Motorwelle senkrecht zu einer zu reinigenden Fläche orientiert ist. Da ein relativ großes Drehmoment zum Betrieb des Feuchtreinigungsgerätes erforderlich ist, ist der Durchmesser des Motors üblicherweise deutlich größer als seine Länge (Höhe). Dadurch kann der Motor besonders platzsparend auch in ein flaches Vorsatzgerät eines Feuchtreinigungsgerätes und/oder einen Reinigungsroboter integriert werden. Zudem wird durch die vertikale Orientierung der Motorwelle auch die mit dem Exzenter in Wirkverbindung stehende Schwingplatte in einer Ebene bewegt, welche parallel zu der zu reinigenden Fläche angeordnet ist. Dementsprechend bewegt sich die flächige Seite der Schwingplatte während eines Reinigungsbetriebs des Feuchtreinigungsgerätes in exzentrischer Kreisbewegung über die zu reinigende Fläche, ggf. entsprechend überlagert durch eine Fahrtbewegung des Feuchtreinigungsgerätes, d.h. eine Vor- oder Zurückbewegung des Feuchtreinigungsgerätes.

### Kurze Beschreibung der Zeichnungen

Im Folgenden wird die Erfindung anhand von Ausführungsbeispielen näher erläutert. Es zeigen:
- Fig. 1: Ein erfindungsgemäßes Feuchtreinigungsgerät,
- Fig. 2: einen Teilbereich des Feuchtreinigungsgerätes gemäß Fig. 1 mit einem Schwingelement, einer Trägerplatte und einem Reinigungselement,
- Fig. 3: ein Antriebssystem gemäß einer ersten Ausführungsform,
- Fig. 4: ein Antriebssystem gemäß einer zweiten Ausführungsform.

### Beschreibung der Ausführungsformen

Die Figuren zeigen als Ausführungsbeispiel für ein Bearbeitungsgerät ein Bodenbearbeitungsgerät, nämlich wie hier weiter bevorzugt ein Feuchtreinigungsgerät 3. Die nachfolgenden Ausführungen betreffend das Feuchtreinigungsgerät 3 haben auch in gleicher Weise Gültigkeit für ein Bearbeitungsgerät mit einem Schwingelement in anderer Ausführung.

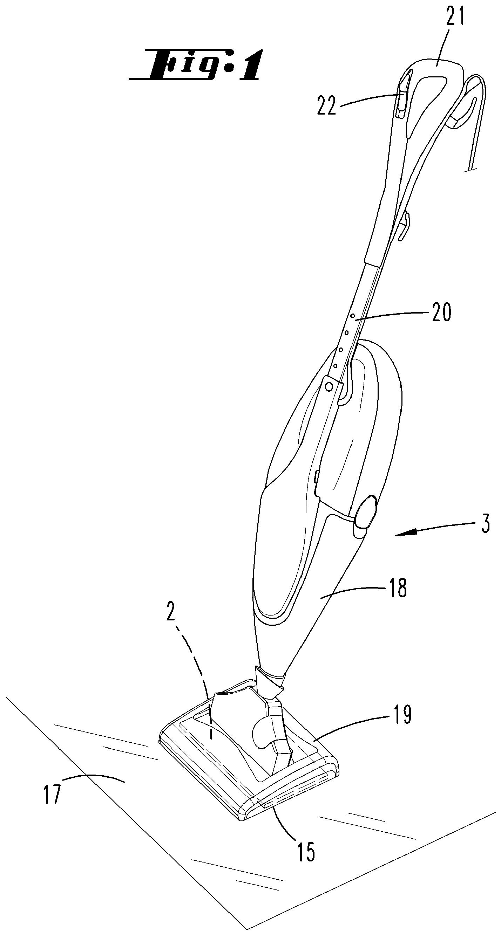

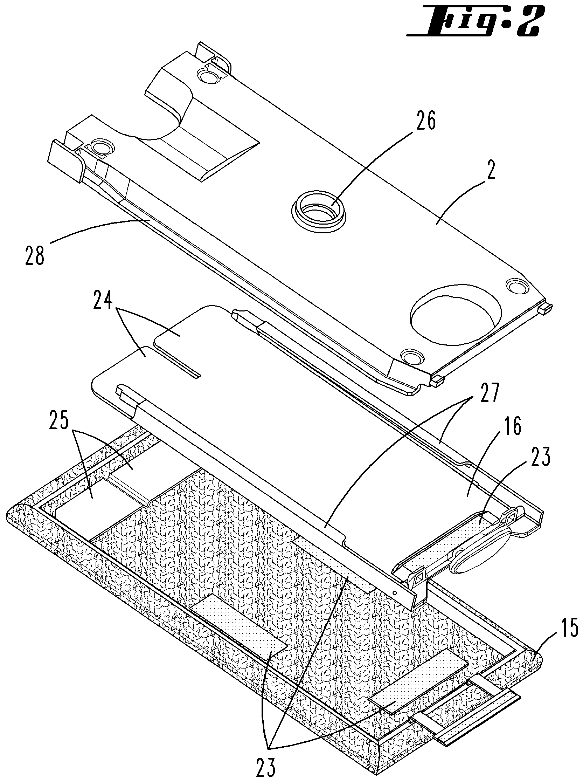

Die Figur 1 zeigt zunächst das Feuchtreinigungsgerät 3, welches ein Basisgerät 18 und ein mit dem Basisgerät 18 verbundenes Vorsatzgerät 19 aufweist. Das Vorsatzgerät 19 weist (siehe Fig. 2) eine Reinigungseinheit aus einem Schwingelement 2, einer Trägerplatte 16 und einem Reinigungselement 15 auf. Das Reinigungselement 15 ist hier ein textiles Wischtuch. Das Feuchtreinigungsgerät 3 ist mittels eines Stiels 20 von einem Nutzer handführbar. An dem Stiel 20 befindet sich ein Handgriff 21, an welchem der Nutzer während eines Reinigungsbetriebs angreifen und das Feuchtreinigungsgerät 3 führen kann. An dem Handgriff 21 ist des Weiteren ein Schalter 22 ausgebildet, welcher hier zum An- und Ausschalten des Feuchtreinigungsgerätes 3 dient und ggf. der Auswahl unterschiedlicher Betriebsmodi des Feuchtreinigungsgerätes 3. Das Feuchtreinigungsgerät 3 verfügt, wenngleich nicht näher dargestellt, über eine Absaugvorrichtung, insbesondere über eine saugdüsenartige Ausgestaltung vor einem Feuchtwischbereich. Der hierzu benötigte Saugluftstrom wird über eine in dem Feuchtreinigungsgerät 3 angeordnete Gebläseeinheit erzeugt, deren Gebläsemotor über ein Elektrokabel des Feuchtreinigungsgerätes 3 versorgt wird. Bevorzugt verfügt das Feuchtreinigungsgerät 3 über einen Filterbeutel oder eine Staubaufnahmekammer mit einem Dauerfilter, welcher der Filterung eingesaugter Luft dient. Das Feuchtreinigungsgerät 3 steht gemäß Fig. 1 auf einer zu reinigenden Fläche 17 auf.

Fig. 2 zeigt im Einzelnen die Reinigungseinheit des Feuchtreinigungsgerätes 3 mit dem Schwingelement 2, der Trägerplatte 16 und dem Reinigungselement 15. Das Schwingelement 2 ist hier als flächige Schwingplatte mit einer langgestreckten, rechteckigen Grundform ausgebildet, welche im Wesentlichen ein Länge-Breite-Verhältnis von etwa 3:1 aufweist. Während einer üblichen Verfahrrichtung des Feuchtreinigungsgerätes 3 während eines Reinigungsbetriebs, d.h. während einer Vor- und Zurückbewegung, steht eine Längsseite des Schwingelementes 2 senkrecht zu der Verfahrrichtung. Das Schwingelement 2 weist eine Kupplung 26 auf, welche zur Verbindung mit einem Antriebssystem 1 des Feuchtreinigungsgerätes 3 dient, wobei das Antriebssystem 1 entweder in dem Vorsatzgerät 19 oder in dem Basisgerät 18 des Feuchtreinigungsgerätes 3 angeordnet sein kann. Das Schwingelement 2 und die Trägerplatte 16 weisen korrespondierende Schienen 27, 28 auf, mittels welcher die Trägerplatte 16 an dem Schwingelement 2 befestigt werden kann. Die Trägerplatte 16 dient zur Aufnahme des Reinigungselementes 15. Dazu weist die Trägerplatte 16 Befestigungselemente 23 auf, welche mit entsprechenden Befestigungselementen 23 des Reinigungselementes 15 korrespondieren. Die Befestigungselemente 23 sind hier Teile eines Klettverschlusses. Die Trägerplatte 16 verfügt zudem über zwei Laschen 24, welche in korrespondierende Aufnahmebereiche 25 des Reinigungselementes 15 eingeschoben werden können. Dadurch kann das Reinigungselement 15 so an der Trägerplatte 16 und schließlich auch an dem Schwingelement 2 befestigt werden, dass einerseits eine flächige Anlage auf der zu reinigenden Fläche 17 während eines üblichen Reinigungsbetriebs mittels des Feuchtreinigungsgerätes 3 erreicht werden kann, und zum anderen gleichzeitig auch die Schwingbewegung des Schwingelementes 2 mitvollzogen wird.

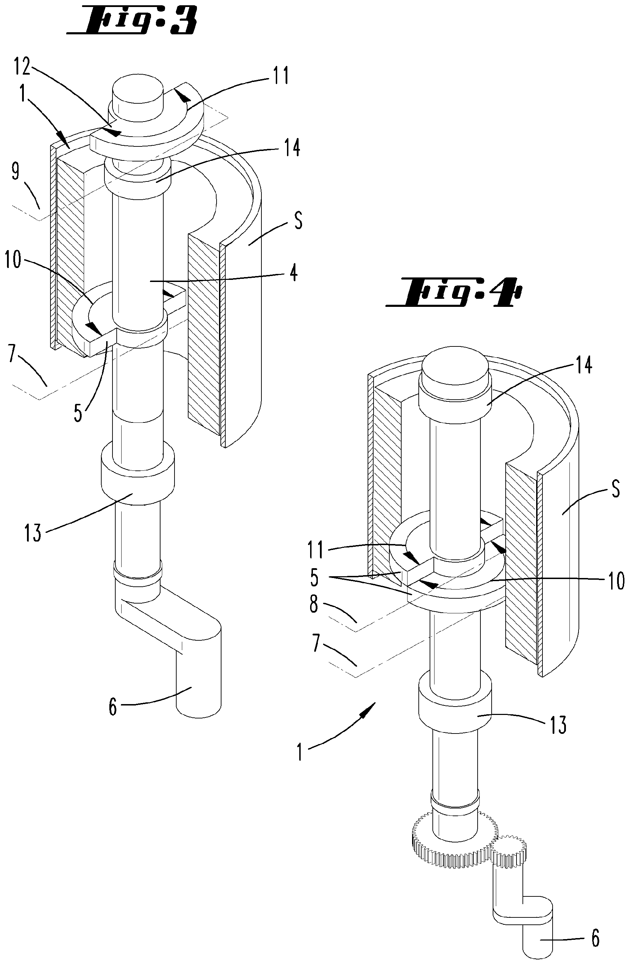

Die Fig. 3 zeigt eine erste Ausführungsform eines Antriebssystems 1, welches den Elektromotor in prinzipieller Wiedergabe darstellt. Es ist ein Rotor 5 und ein Stator S dargestellt, wobei bei dem hier wiedergegebenen Innenläufer-Motor der Stator S umgebend zu dem Rotor 5 ausgebildet ist. Der Rotor 5 ist mit einer Motorwelle 4 verbunden oder kann von der Motorwelle 4 durchsetzt sein. Weiter ist ein Exzenter 6 ausgebildet. Es kann ein Kontergewicht 12 vorgesehen sein, das beim Ausführungsbeispiel und bevorzugt außerhalb einer in Richtung einer geometrischen Achse der Motorwelle 4 gesehen radialen Überdeckung zu dem Stator S angeordnet ist.

Die Motorwelle 4 ist mittels bevorzugt zweier Lager 13, 14, gegebenenfalls aber auch nur mittels eines Lagers 13 oder 14 innerhalb des Feuchtreinigungsgerätes 3 drehbar gehaltert. Ein erstes Lager 13 kann sich dabei an einem Teilbereich der Motorwelle 4 zwischen dem Rotor 5 und dem Exzenter 6 befinden. Ein zweites Lager 14 kann sich an der Motorwelle 4 zwischen dem Rotor 5 und dem gegebenenfalls vorgesehenen Kontergewicht 12, jedenfalls aber bezüglich des Rotors 5 bei dieser Ausgestaltung bevorzugt gegenüberliegend zu dem ersten Lager 13 befinden.

Der mit der Motorwelle 4 verbundene Exzenter 6 übersetzt die rotierende Bewegung der Motorwelle 4 in eine exzentrische Schwingbewegung des mit dem Exzenter 6 verbundenen Schwingelementes 2, welches mittels der Kupplung 26 mit dem Exzenter 6 verbunden ist. Der Rotor 5 ist bezogen auf eine Querschnittsebene 7, welche senkrecht zu einer Längserstreckung der Motorwelle 4 orientiert ist, halbkreisförmig ausgebildet und verursacht bei einer Rotation der Motorwelle 4 und damit auch einer Rotation des Rotors 5 eine Unwucht des Antriebssystems 1. Das Kontergewicht 12 ist in einer zu der Motorwelle 4 ebenfalls senkrecht stehenden Querschnittsebene 9 ebenfalls halbkreisförmig ausgebildet, wobei sich ein von der Halbkreisform des Kontergewichts 12 überdeckter Winkelteilbereich 11 - bezogen auf die Umfangsrichtung der Motorwelle 4 - von einem Winkelteilbereich 10 unterscheidet, der in der Querschnittsebene 7 von der Halbkreisform des Rotors 5 überdeckt ist.

In dem hier gezeigten Ausführungsbeispiel erstreckt sich der Winkelteilbereich 10 des Rotors 5 bezogen auf eine Projektion des Antriebssystems 1 entlang der Längserstreckung der Motorwelle 4 bspw. in einem Bereich von 0° bis 180°, während sich der Winkelteilbereich 11 des Kontergewichtes 12 in einem Bereich von 180° bis 360° befindet. Auch das gegebenenfalls vorgesehene Kontergewicht 12 erzeugt durch seine asymmetrische Ausbildung relativ zu der Motorwelle 4 eine Unwucht. Somit weist das Antriebssystem 1 in dem gegebenen Fall in zwei verschiedenen Querschnittsebenen 7, 9 zwei Unwucht erzeugende Gewichte auf, welche in Verbindung mit dem an dem Exzenter 6 angeordneten Schwingelement 2 während des Betriebs des Feuchtreinigungsgerätes 3 eine optimale Laufruhe des Feuchtreinigungsgerätes 3 bewirken. Eine der Querschnittsebenen, hier bevorzugt die Querschnittsebene 7, ist hierbei in radialer Überdeckung zu dem Stator S, während die andere Querschnittsebene, hier die Querschnittsebene 9, bevorzugt außerhalb einer radialen Überdeckung zu dem Stator S gegeben ist. Die Unwuchten des Rotors 5, des Kontergewichtes 12 und des Schwingelementes 2 kompensieren sich dabei optimalerweise vollständig.

Fig. 4 zeigt eine zweite Ausführungsform eines Antriebssystems 1, bei welchem auf der Motorwelle 4 ein Rotor 5 angeordnet ist, welcher in zwei verschiedenen Querschnittsebenen 7, 8 zueinander unterschiedliche Winkelteilbereiche 10, 11 überdeckt. Ein erster Teilbereich des Rotors 5 umfasst dabei in einer ersten Querschnittsebene 7 einen Winkelteilbereich von 0° bis 180°, und ein zweiter Teilbereich des Rotors 5 überdeckt innerhalb einer zweiten Querschnittsebene 8 einen Winkelteilbereich von 180° bis 360°. Insgesamt werden somit innerhalb der beiden Querschnittsebenen 7, 8 zwei Unwuchten erzeugt, welche sich mit der Unwucht des Schwingelementes 2 so aufheben, dass eine Gesamtunwucht des Antriebssystems 1 inklusive des Schwingelementes 2 gegen Null geht. Auch gemäß diesem zweiten Ausführungsbeispiel ist der Rotor 5 asymmetrisch relativ zu der Motorwelle 4 ausgebildet.

Obwohl dies in den Ausführungsbeispielen nicht gezeigt ist, versteht es sich von selbst, dass die Form des Rotors 5 bzw. des Kontergewichtes 12 abweichend sein kann. Insbesondere kann durch eine abweichende Form auch eine andere radiale Position eines Massenschwerpunktes des Rotors 5 bzw. Kontergewichtes 12 relativ zu der Motorwelle 4 erreicht werden. Darüber hinaus spielen neben der Form des Rotors 5 auch bspw. Materialparameter des verwendeten Materials eine Rolle, insbesondere ein Volumengewicht bzw. eine Gewichtsverteilung des jeweiligen Materials.

Als besonders bevorzugt gilt die in der Figur 3 des Ausführungsbeispiels dargestellte Ausgestaltung, bei welcher der Exzenter 6 unmittelbar, hier als Fortsatz der Motorwelle 4, mit dem Rotor 5 verbunden ist, ohne eine Zwischenanordnung eines Getriebes, welches wiederum eine Verlustleistung des Antriebssystems 1 hervorrufen würde. Diese Ausgestaltung hat auch hinsichtlich des Ausführungsbeispiels der Figur 4 Bedeutung.

**Liste der Bezugszeichen**

| | | | |
|---|---|---|---|
| 1 | Antriebssystem | S | Stator |
| 2 | Schwingelement | | |
| 3 | Feuchtreinigungsgerät | | |
| 4 | Motorwelle | | |
| 5 | Rotor | | |
| 6 | Exzenter | | |
| 7 | Querschnittsebene | | |
| 8 | Querschnittsebene | | |
| 9 | Querschnittsebene | | |
| 10 | Winkelteilbereich | | |
| 11 | Winkelteilbereich | | |
| 12 | Kontergewicht | | |
| 13 | Lager | | |
| 14 | Lager | | |
| 15 | Reinigungselement | | |
| 16 | Trägerplatte | | |
| 17 | Fläche | | |
| 18 | Basisgerät | | |
| 19 | Vorsatzgerät | | |
| 20 | Stiel | | |
| 21 | Handgriff | | |
| 22 | Schalter | | |
| 23 | Befestigungselement | | |
| 24 | Lasche | | |
| 25 | Aufnahmebereich | | |
| 26 | Kupplung | | |
| 27 | Schiene | | |
| 28 | Schiene | | |

## Patentansprüche

1. Antriebssystem (1) zum exzentrischen Antrieb eines Schwingelementes (2) eines Bodenbearbeitungsgerätes, wobei das Antriebssystem (1) einen Innenläufer-Motor mit einem Stator, einer Motorwelle (4), einen mit der Motorwelle (4) verbundenen Rotor (5) und einen mit der Motorwelle (4) verbundenen Exzenter (6) aufweist, wobei der Exzenter (6) eingerichtet ist, eine Rotationsbewegung der Motorwelle (4) in eine exzentrische Schwingbewegung des Schwingelementes (2) zu wandeln, **dadurch gekennzeichnet, dass** der Rotor (5) in einer Querschnittsebene (7, 8) senkrecht zu der Motorwelle (4) und in einem radialen Überdeckungsbereich zu dem Stator (S) zum Zwecke eines Unwuchtausgleichs asymmetrisch bezogen auf die Motorwelle (4) ausgebildet ist.

2. Antriebssystem (1) nach Anspruch 1, **dadurch gekennzeichnet, dass** es zum Antrieb eines Schwingelementes (2) eines Feuchtreinigungsgerätes (3) dient.

3. Antriebssystem (1) nach einem der vorhergehenden Ansprüche, **dadurch gekennzeichnet, dass** der Exzenter (6) eine unmittelbare Wirkverbindung zu dem Rotor (5) aufweist, insbesondere ohne Zwischenanordnung eines Getriebes mit dem Rotor (5) verbunden ist.

4. Antriebssystem (1) nach einem der vorhergehenden Ansprüche, **dadurch gekennzeichnet, dass** der Rotor (5) in zwei verschiedenen Querschnittsebenen (7, 8) entlang der Motorwelle (4) asymmetrisch ausgebildet ist, wobei der Rotor (5) in den beiden Querschnittsebenen (7, 8) eine zueinander abweichende Form und/oder abweichende radiale Position eines Massenschwerpunktes des Rotors (5) aufweist.

5. Antriebssystem (1) nach Anspruch 4, **dadurch gekennzeichnet, dass** der Rotor (5) in einer ersten Querschnittsebene (7) bezogen auf eine Umfangsrichtung der Motorwelle (4) einen anderen Winkelteilbereich (10, 11) bedeckt als in einer zweiten Querschnittsebene (8).

6. Antriebssystem (1) nach Anspruch 5, **dadurch gekennzeichnet, dass** der Rotor (5) in der ersten Querschnittsebene (7) einen Winkelteilbereich (10) von 0° bis 180° bedeckt, und in der zweiten Querschnittsebene (8) einen Winkelteilbereich (11) von 180° bis 360° bedeckt.

7. Antriebssystem (1) nach einem der vorhergehenden Ansprüche, **dadurch gekennzeichnet, dass** dem Rotor (5) ein separat zu dem Rotor (5) an der Motorwelle (4) angeordnetes Kontergewicht (12) zugeordnet ist.

8. Antriebssystem (1) nach einem der vorhergehenden Ansprüche, **dadurch gekennzeichnet, dass** das Antriebssystem (1) zwischen dem Rotor (5) und dem Exzenter (6) und/oder zwischen dem Kontergewicht (12) und dem Rotor (5) ein Lager (13, 14) für die Motorwelle (4) aufweist.

9. Antriebssystem (1) nach einem der Ansprüche 7 oder 8, **dadurch gekennzeichnet, dass** der Rotor (5) in einer ersten Querschnittsebene (7) bezogen auf eine Umfangsrichtung der Motorwelle (4) einen anderen Winkelteilbereich (10, 11) bedeckt als das Kontergewicht (12) in einer zweiten Querschnittsebene (9).

10. Antriebssystem nach einem der vorhergehenden Ansprüche, **dadurch gekennzeichnet, dass** ein Längenabschnitt der Motorwelle (4), welcher durch zwei die Motorwelle (4) innerhalb des Feuchtreinigungsgerätes (3) lagernde Lager (13, 14) begrenzt ist, ausschließlich mit dem Rotor (5) verbunden ist.

11. Feuchtreinigungsgerät (3) mit einer ein Reinigungselement (15) aufnehmenden Schwingplatte, **gekennzeichnet durch** ein Antriebssystem (1) nach einem der vorhergehenden Ansprüche, wobei das angetriebene Schwingelement (2) die das Reinigungselement (15) aufnehmende Schwingplatte ist.

12. Feuchtreinigungsgerät (3) nach Anspruch 11, **dadurch gekennzeichnet, dass** der Innenläufer-Motor so in dem Feuchtreinigungsgerät (3) eingebaut ist, dass die Motorwelle (4) des Innenläufer-Motors während einer üblichen Gebrauchsstellung des Feuchtreinigungsgerätes (3) während eines Reinigungsbetriebs auf einer horizontalen ebenen Fläche (17) im Wesentlichen vertikal orientiert ist.
